# EUROPEAN PATENT APPLICATION

(11) **EP 4 297 132 A1**
(43) Date of publication of application: **27.12.2023**
(21) Application number: 22780865.6
(22) Date of filing: 29.03.2022
(51) Int. Cl.: H01M 4/66

(54) **CURRENT COLLECTOR STEEL FOIL, ELECTRODE, AND BATTERY**

(30) Priority: 31.03.2021 JP 2021060827
(71) Applicant: NIPPON STEEL Chemical & Material Co., Ltd., Tokyo 103-0027 (JP)
(72) Inventor: OGURA, Takuya, Tokyo 100-8071 (JP); NAGATA, Tatsuo, Tokyo 100-8071 (JP); FUJIMOTO, Naoki, Tokyo 103-0027 (JP); KOSUGI, Nobumasa, Tokyo 103-0027 (JP)
(74) Representative: Zimmermann & Partner Patentanwälte mbB
(86) International application number: PCT/JP2022/015309
(87) International publication number: WO 2022/210654

(57) **Abstract**

A steel foil for a current collector is provided which has high adhesiveness to an electrode mixture layer and which can increase electrical conductivity when the electrode mixture layer is formed on a surface thereof. The steel foil for a current collector according to the present disclosure includes a base material, and a Ni plating layer formed on the surface of the base material. When an arithmetic average roughness of the surface of the Ni plating layer is defined as "Ra", a mean distance between peaks formed on the surface of the Ni plating layer and identified by line roughness analysis is defined as "D", and a mean radius of curvature of peaks formed on the surface of the Ni plating layer and identified by surface roughness analysis is defined as "r", Ra × D is 0.060 to 0.400 µm² and r is 0.010 to 0.500 µm.

## Description

### TECHNICAL FIELD

The present disclosure relates to a steel foil for a current collector to be used in an electrode of a battery, an electrode in which the steel foil for a current collector is used, and a battery in which the electrode is used.

### BACKGROUND ART

Batteries such as primary batteries and secondary batteries are being used as power sources for various electronic devices. Specifically, in recent years, due to the widespread use of small electronic devices such as home video cameras, notebook computers, and smartphones, secondary batteries that are typified by lithium ion batteries have rapidly come into widespread use. With the further downsizing and higher performance of such small electronic devices, there is a demand to further reduce the size and improve the performance of such batteries. Note that, in the present description, the term "secondary battery" refers to, for example, non-aqueous electrolyte secondary batteries, aqueous electrolyte secondary batteries, and all-solid-state secondary batteries.

A battery includes electrodes, a separator, and an electrolyte. The electrodes include a positive electrode and a negative electrode. For both the positive electrode and the negative electrode, an electrode mixture layer is formed on a current collector. The current collector is a base material of the electrode. The electrode mixture layer is a layer that includes an active material and a binder. The current collector has a function of supplying electrical current to the active material, and a function of retaining the active material. Metal foils have so far been used as current collectors. Specifically, for example, currently, in lithium ion batteries, copper foil is used as a negative electrode current collector, and aluminum foil is used as a positive electrode current collector.

The term "active material" means a material that is capable of occluding and releasing ions of an electrolyte. Specifically, for example, in lithium ion batteries, currently a graphite-based carbon material is used as a negative electrode active material, and an oxide that is typified by LiCoO₂ is used as a positive electrode active material. The binder has a function of binding together the active materials, and binding the active material and the current collector. The binder is, for example, resin.

The separator is arranged as an insulator between the positive electrode and the negative electrode to thereby prevent the occurrence of electrical short circuits. Specifically, for example, in lithium ion batteries, porous organic films are currently used as separators. The electrolyte exchanges ions with the positive electrode and the negative electrode. Regarding the electrolyte, in recent years, not only liquid electrolytic solutions but also solid electrolytes have been developed.

As mentioned above, there is a demand to further reduce the size and improve the performance of batteries. Consequently, on the basis of achieving a reduction in size and an improvement in performance, there is a demand for current collectors to have a higher strength than the aforementioned copper foil and aluminum foil. Therefore, steel foil that is an iron-based metal foil which is superior in strength and heat resistance to copper foil and aluminum foil is attracting attention as a base material for a current collector.

Japanese Patent Application Publication No. 2012-33470 (Patent Literature 1) and International Application Publication No. WO2013/157598 (Patent Literature 2) each proposes a steel foil for a current collector.

The steel foil disclosed in Patent Literature 1 has steel as a core material (base material), and on both surfaces of the steel foil, has a copper covering layer which has a mean thickness t_{Cu} of 0.02 to 5.0 µm on each surface. A mean thickness t of this steel foil is 3 to 100 µm, and tcult is 0.3 or less. Patent Literature 1 discloses that according to this steel foil, a negative electrode current collector that has higher strength and durability can be provided.

The steel foil disclosed in Patent Literature 2 has a chemical composition consisting of, in mass%, C: 0.0001 to 0.02%, Si: 0.001 to 0.01%, Mn: 0.01 to 0.3%, P: 0.001 to 0.02%, S: 0.0001 to 0.01%, Al: 0.0005 to 0.1%, and N: 0.0001 to 0.004%, with the balance being Fe and impurities. In addition, this steel foil has a thickness of 5 to 15 µm, and a tensile strength of more than 900 to 1200 MPa. Patent Literature 2 discloses that this steel foil is lightweight and economic, and that according to this steel foil, a steel foil for a negative electrode current collector in which both strength and electric resistance are compatibly achieved can be provided.

### CITATION LIST

### PATENT LITERATURE

Patent Literature 1: Japanese Patent Application Publication No. 2012-33470
Patent Literature 2: International Application Publication No. WO2013/157598

### SUMMARY OF INVENTION

### TECHNICAL PROBLEM

As proposed in the aforementioned Patent Literatures 1 and 2, a lightweight and high-strength current collector can be obtained by using a steel foil. However, when a steel foil is used as a current collector, in some cases the adhesiveness to the electrode mixture layer decreases. If the adhesiveness of a steel foil for a current collector to an electrode mixture layer is low, the electrode mixture layer will be liable to peel off from the steel foil for a current collector. As a result, an electrode that includes the steel foil for a current collector and the electrode mixture layer will not be able to sufficiently exhibit its function. However, in each of the aforementioned Patent Literatures 1 and 2, adhesiveness between the steel foil and an electrode mixture layer is not investigated.

In this connection, as mentioned above, a steel foil for a current collector in an electrode has a function of supplying electrical current to an active material in an electrode mixture layer. Here, there is a possibility that if the electrical conductivity of the electrode decreases, the electromotive force of the battery will decrease. In addition, there is a possibility that if the electrical conductivity of the electrode decreases, the electrode will generate heat during use as a battery, and the life of the battery will be shortened. Therefore, it is preferable that an electrode obtained by forming an electrode mixture layer on the surface of a steel foil for a current collector has high electrical conductivity. However, in each of the aforementioned Patent Literatures 1 and 2, the electrical conductivity of an electrode obtained by forming an electrode mixture layer on the surface of a steel foil for a current collector is not investigated.

An object of the present disclosure is to provide a steel foil for a current collector which has high adhesiveness to an electrode mixture layer and in which the electrical conductivity in a case where an electrode mixture layer is formed on the surface thereof is high, an electrode in which the steel foil for a current collector is used, and a battery in which the electrode is used.

### SOLUTION TO PROBLEM

A steel foil for a current collector according to the present disclosure includes:
a base material, and a Ni plating layer which is formed on a surface of the base material,
wherein:
   when an arithmetic average roughness of a surface of the Ni plating layer is defined as "Ra", a mean distance between peaks which are formed on the surface of the Ni plating layer and which are identified by line roughness analysis is defined as "D", and a mean radius of curvature of peaks which are formed on the surface of the Ni plating layer and which are identified by surface roughness analysis is defined as "r",
   Ra × D is 0.060 to 0.400 µm², and
   r is 0.010 to 0.500 µm.

An electrode according to the present disclosure includes:
the aforementioned steel foil for a current collector, and
an electrode mixture layer that is formed on a surface of the steel foil for a current collector.

A battery according to the present disclosure includes:
the aforementioned electrode,
a separator, and
an electrolyte.

### ADVANTAGEOUS EFFECTS OF INVENTION

In the steel foil for a current collector according to the present disclosure, the adhesiveness to an electrode mixture layer is high, and the electrical conductivity in a case where an electrode mixture layer is formed on the surface of the steel foil is high. In the electrode according to the present disclosure, the adhesiveness between the steel foil for a current collector and an electrode mixture layer is high, and the electrical conductivity is high.

### BRIEF DESCRIPTION OF DRAWINGS

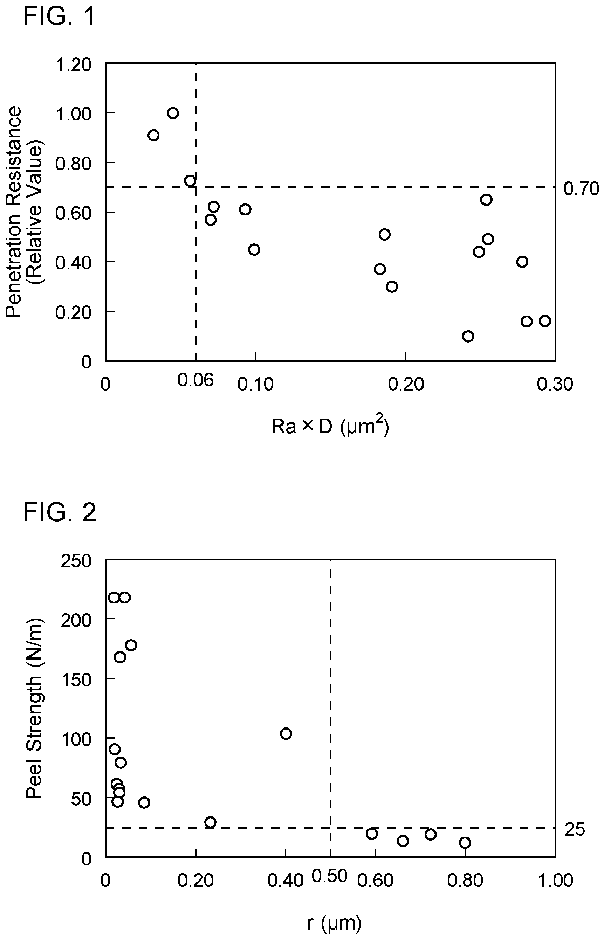

[FIG. 1] FIG. 1 is a view illustrating the relation between a value obtained by multiplying a mean distance D (µm²) between peaks which were formed on a Ni plating layer surface of a steel foil for a current collector and were identified by line roughness analysis by an arithmetic average roughness Ra of the Ni plating layer surface, and a penetration resistance (relative value) that is an index of the electrical conductivity of the steel foil for a current collector on which an electrode mixture layer was formed in the present Examples.
[FIG. 2] FIG. 2 is a view illustrating the relation between a mean radius of curvature r (µm) of peaks which were formed on the Ni plating layer surface of the steel foil for a current collector and were identified by surface roughness analysis, and a peel strength (N/m) that is an index of the adhesiveness to the electrode mixture layer of the steel foil for a current collector in the present Examples.

### DESCRIPTION OF EMBODIMENT

The present inventors conducted studies regarding, in a case where a steel foil is used as a current collector, means for increasing the adhesiveness to an electrode mixture layer, and increasing the electrical conductivity of the steel foil for a current collector on which the electrode mixture layer is formed. As a result, the present inventors obtained the following findings.

In comparison to other metal foils, in many cases the surface of the steel foil is smooth. In particular, the surface of a steel foil produced by cold rolling is extremely smooth. The present inventors considered that because of the high level of smoothness of its surface, the adhesiveness of the steel foil to an electrode mixture layer is liable to decrease in comparison to other metal foils. That is, by roughening the surface of the steel foil, it may be possible to increase the adhesiveness of the steel foil to the electrode mixture layer. Therefore, the present inventors considered forming a film on the surface of the steel foil (base material) to produce the steel foil for a current collector with a rough surface.

In this connection, the electrode mixture layer contains a binder that is typified by resin. Usually, the electrical conductivity of the binder is low. Therefore, at the interface between the steel foil for a current collector and the electrode mixture layer, it is difficult for a current to flow in a region of the interface where the binder is present. That is, there is a possibility that contact resistance will arise at the interface between the steel foil for a current collector and the electrode mixture layer. If the contact resistance that arises at the interface between the steel foil for a current collector and the electrode mixture layer increases, the electrical conductivity of an electrode obtained by forming the electrode mixture layer on the surface of the steel foil for a current collector will decrease.

That is, in the case where the film is formed on the surface of the base material to produce the steel foil for a current collector with a rough surface, if the electrical conductivity of the film is low, the electrical conductivity of the electrode produced using the steel foil for a current collector will decrease. Therefore, the present inventors conducted detailed studies regarding means for roughening the surface of the steel foil for a current collector without impairing the electrical conductivity of the electrode. As a result, the present inventors found that it is possible to compatibly achieve both adhesiveness and electrical conductivity by forming a Ni plating layer which has shapes having irregularities on its surface.

It is considered that if a plating layer that has shapes having irregularities is formed on the surface of the base material, the electrode mixture layer will enter between the shapes having irregularities, which will make it difficult for the electrode mixture layer to peel off from the steel foil for a current collector. In other words, it is possible to increase the adhesiveness of the steel foil for a current collector to the electrode mixture layer. In addition, it is considered that the surface area where the steel foil for a current collector and the electrode mixture layer contact will be increased by the shapes having irregularities. As a result, there is a possibility that the amount of active material contacting the steel foil for a current collector will increase, and contact resistance that arises at the interface between the steel foil for a current collector and the electrode mixture layer can be reduced. In addition, if a Ni plating layer is formed on the surface of the base material, the formation of an oxide film on the surface of the base material composed of steel can be suppressed. In other words, there is a possibility that the electrical conductivity of an electrode prepared from the steel foil for a current collector will be increased.

Therefore, the present inventors produced various kinds of steel foils for a current collector in which the Ni plating layer that has the shapes having irregularities was formed on the surface of the base material, and evaluated the adhesiveness of the steel foil for a current collector to the electrode mixture layer, as well as the electrical conductivity of the steel foil for a current collector on which the electrode mixture layer was formed. As a result of detailed studies by the present inventors, it was revealed that in order to achieve both favorable adhesiveness and electrical conductivity, it is not sufficient to simply increase the roughness of the Ni plating layer surface, but that it is effective to control the shape of the Ni plating layer surface. In other words, contrary to the expectations of the present inventors, if the arithmetic average roughness of the Ni plating layer surface is simply increased, both favorable adhesiveness and electrical conductivity of the steel foil for a current collector on which the electrode mixture layer is formed cannot be compatibly achieved.

As a result of further detailed studies by the present inventors, it was revealed that in order to achieve both adhesiveness and electrical conductivity with respect to the steel foil for a current collector on which the electrode mixture layer is formed, it suffices to control an arithmetic average roughness Ra of the surface of the Ni plating layer, a mean distance D between peaks formed on the Ni plating layer surface, and a mean radius of curvature r of peaks formed on the surface of the Ni plating layer.

Specifically, with respect to the steel foil for a current collector according to the present embodiment, it was revealed that when an arithmetic average roughness of the surface of the Ni plating layer is defined as "Ra", a mean distance between peaks which are formed on the surface of the Ni plating layer and which are identified by line roughness analysis is defined as "D", and a mean radius of curvature of peaks which are formed on the surface of the Ni plating layer and which are identified by surface roughness analysis is defined as "r", if Ra × D is 0.060 to 0.400 (µm²) and r is 0.010 to 0.500 (µm), the adhesiveness of the steel foil for a current collector to an electrode mixture layer, and the electrical conductivity of the steel foil for a current collector on which the electrode mixture layer is formed increase. This point will now be described in detail using the drawings.

FIG. 1 is a view illustrating the relation between Ra × D (µm²) and a penetration resistance (relative value) that is an index of electrical conductivity in the present Examples. FIG. 1 was created using Ra × D (µm²) and a penetration resistance (relative value) that is an index of electrical conductivity with respect to, among Examples that are described later, those Examples in which the Ni plating layer was formed on the surface of the steel foil. Note that, the penetration resistance (relative value) was determined by a method to be described later. The lower the penetration resistance is, the higher the electrical conductivity is indicated.

Referring to FIG. 1, it can be confirmed that with respect to the steel foils on which the Ni plating layer was formed, when Ra × D was 0.060 (µm²) or more, the electrical conductivity of the steel foil for a current collector on which the electrode mixture layer was formed increased. Therefore, in the present embodiment, Ra × D is to be 0.060 (µm²) or more.

FIG. 2 is a view illustrating the relation between r (µm) and peel strength (N/m) that is an index of adhesiveness in the present Examples. FIG. 2 was created using r (µm) and peel strength (N/m) that is an index of adhesiveness with respect to, among Examples to be described later, those Examples in which the Ni plating layer was formed on the surface of the steel foil. Note that, the peel strength (N/m) was determined by a method to be described later. The higher the peel strength is, the higher the adhesiveness is indicated.

Referring to FIG. 2, it can be confirmed that with respect to the steel foils on which the Ni plating layer was formed, when r was 0.500 (µm) or less, the adhesiveness of the steel foil for a current collector to the electrode mixture layer increased in comparison to when r was more than 0.500 (µm). Therefore, in the present embodiment r is to be 0.500 (µm) or less.

Accordingly, the steel foil for a current collector according to the present embodiment includes the base material, and the Ni plating layer that is formed on the surface of the base material, in which, on the surface of the Ni plating layer, Ra × D is 0.060 to 0.400 (µm²) and r is 0.010 to 0.500 (µm). As a result, in the steel foil for a current collector according to the present embodiment, the adhesiveness to the electrode mixture layer is high, and in addition, the electrical conductivity of the steel foil for a current collector on which the electrode mixture layer is formed is high.

With regard to the adhesiveness and the electrical conductivity of the steel foil for a current collector on which the electrode mixture layer is formed, the details regarding the reason why it is effective to control not only the arithmetic average roughness Ra of the Ni plating layer surface but also the mean distance D between peaks formed on the Ni plating layer surface and the mean radius of curvature r of the peaks formed on the surface of the Ni plating layer have not been clarified. However, the present inventors surmise that the reason is as follows.

Here, the arithmetic average roughness Ra of the surface of the Ni plating layer is an index that indicates the amplitude of the shapes having irregularities of the Ni plating layer surface. That is, the larger the arithmetic average roughness Ra is, the larger the irregularities formed on the Ni plating layer surface are on average. Further, the mean distance D between peaks formed on the surface of the Ni plating layer is an index indicating the density of the irregularities in the shapes having irregularities of the Ni plating layer surface. That is, the smaller the mean distance D between peaks is, the more densely irregularities are formed on the Ni plating layer surface.

In a case where the arithmetic average roughness Ra of the Ni plating layer surface is large, and the mean distance D between peaks formed on the Ni plating layer surface is too small, large irregularities are densely formed on the Ni plating layer surface. In this case, there is a possibility that it will be difficult for an electrode mixture layer to enter between the irregularities formed on the Ni plating layer surface. As a result, there is a possibility that gaps will occur between the Ni plating layer and the electrode mixture layer, and the surface area where the steel foil for a current collector and the electrode mixture layer come in contact will, on the contrary, become smaller. The present inventors surmise that, as a result, even if the arithmetic average roughness Ra of the Ni plating layer surface is large, the electrical conductivity of the steel foil for a current collector on which the electrode mixture layer is formed decreases.

Further, in a case where the arithmetic average roughness Ra of the Ni plating layer surface is large, and the mean distance D between peaks formed on the Ni plating layer surface is too large, large irregularities are sparsely formed on the Ni plating layer surface. In this case, the number of irregularities on the Ni plating layer surface is small, and there is a possibility that the surface area where the Ni plating layer and the electrode mixture layer come in contact will not be large enough. The present inventors surmise that, as a result, even if the arithmetic average roughness Ra of the Ni plating layer surface is large, the electrical conductivity of the steel foil for a current collector on which the electrode mixture layer is formed decreases.

The mean radius of curvature r of peaks formed on the surface of the Ni plating layer is an index that indicates the sharpness of the shapes having irregularities of the Ni plating layer surface. There is a possibility that even when the arithmetic average roughness Ra of the Ni plating layer surface is large, if the mean radius of curvature r of the peaks formed on the surface of the Ni plating layer is too large, a sufficient anchoring effect with respect to the electrode mixture layer cannot be obtained. The present inventors surmise that, as a result, even if the arithmetic average roughness Ra of the Ni plating layer surface is large, adhesiveness to the electrode mixture layer cannot be sufficiently obtained.

The present inventors surmise that, by the mechanism described above, by controlling not only the arithmetic average roughness Ra of the Ni plating layer surface but also the mean distance D between peaks formed on the Ni plating layer surface and the mean radius of curvature r of peaks formed on the surface of the Ni plating layer, the adhesiveness to the electrode mixture layer increases and, in addition, the electrical conductivity of the steel foil for a current collector on which the electrode mixture layer is formed increases. Note that, there is also a possibility that by controlling not only the arithmetic average roughness Ra of the Ni plating layer surface but also the mean distance D between peaks formed on the Ni plating layer surface and the mean radius of curvature r of peaks formed on the surface of the Ni plating layer, the adhesiveness with respect to the electrode mixture layer increases and, in addition, the electrical conductivity of the steel foil for a current collector on which the electrode mixture layer is formed increases by a mechanism that is different from the mechanism described above. However, the fact that in the steel foil for a current collector according to the present embodiment, as a result of Ra × D being 0.060 to 0.400 (µm²) and r being 0.010 to 0.500 (µm) on the surface of the Ni plating layer, the adhesiveness to the electrode mixture layer is high and, in addition, the electrical conductivity of the steel foil for a current collector on which the electrode mixture layer is formed is high has been demonstrated by Examples that are described later.

The gist of the steel foil for a current collector, the electrode, and the battery according to the present embodiment that were completed based on the above findings is as follows.

[1] A steel foil for a current collector, including:
   a base material, and a Ni plating layer that is formed on a surface of the base material,
   wherein:
      when an arithmetic average roughness of a surface of the Ni plating layer is defined as "Ra", a mean distance between peaks which are formed on the surface of the Ni plating layer and which are identified by line roughness analysis is defined as "D", and a mean radius of curvature of peaks which are formed on the surface of the Ni plating layer and which are identified by surface roughness analysis is defined as "r",
      Ra × D is 0.060 to 0.400 µm², and
      r is 0.010 to 0.500 µm.
[2] The steel foil for a current collector according to [1], wherein:
   a mean thickness of the base material is 5 to 30 µm.
[3] An electrode, including:
   the steel foil for a current collector according to [1] or [2], and
   an electrode mixture layer that is formed on a surface of the steel foil for a current collector.
[4] A battery, including:
   the electrode according to [3],
   a separator, and
   an electrolyte.

Hereunder, the steel foil for a current collector according to the present embodiment, the electrode according to the present embodiment, and the battery according to the present embodiment are described.

### [Steel foil for a current collector]

The steel foil for a current collector according to the present embodiment includes a base material, and a Ni plating layer that is formed on the surface of the base material. As mentioned above, in the present description the term "steel foil" means a steel sheet having a thickness of 50 µm or less. In short, the thickness of the steel foil for a current collector according to the present embodiment is 50 µm or less. The thinner the thickness of the steel foil for a current collector is, the higher the energy density of a battery which uses an electrode produced using the steel foil for a current collector will be. However, if the steel foil for a current collector is too thin, production of the steel foil for a current collector will be difficult.

### [Base material]

In the present embodiment, the base material is an iron-based metal foil (steel foil). That is, in the chemical composition of the base material, the element with the highest content is iron (Fe). The base material may be a carbon steel foil, or may be a stainless steel foil. In a case where the base material is a stainless steel foil, the kind of stainless steel is not particularly limited, and for example the stainless steel foil may be a ferritic stainless steel foil, may be a martensitic stainless steel foil, may be an austenitic stainless steel foil, may be a duplex ferritic-martensitic stainless steel foil, or may be a duplex ferritic-austenitic stainless steel foil.

In the present embodiment, a preferable upper limit of the thickness of the base material is 45 µm, more preferably is 40 µm, further preferably is 35 µm, and further preferably is 30 µm. In the present embodiment, a preferable lower limit of the thickness of the base material is 1 µm, more preferably is 3 µm, and further preferably is 5 µm. In short, in the present embodiment, preferably the thickness of the base material is within the range of 5 to 30 µm. In this case, the base material can be stably produced, and the energy density further increases in the battery that uses the electrode produced using the base material.

### [Ni plating layer]

In the steel foil for a current collector according to the present embodiment, the Ni plating layer is formed on the surface of the base material. The chemical composition of the Ni plating layer consists of Ni and impurities. The thickness of the Ni plating layer is not particularly limited. The thickness of the Ni plating layer is, for example, 1 to 20 µm. If the Ni plating layer is too thick, the steel foil for a current collector will be too thick, which will go against the industrial demand for downsizing of secondary batteries. On the other hand, if the Ni plating layer is too thin, it will be difficult to form the uniform Ni plating layer on the surface of the base material. Hence, in the present embodiment, a preferable thickness of the Ni plating layer is 1 to 20 µm. Note that, the thickness of the Ni plating layer according to the present embodiment can be determined by the fluorescent X-ray type test method defined in JIS H 8501 (1999).

In the present embodiment, when an arithmetic average roughness of the surface of the Ni plating layer is defined as "Ra", a mean distance between peaks which are formed on the surface of the Ni plating layer and which are identified by line roughness analysis is defined as "D", and a mean radius of curvature of peaks which are formed on the surface of the Ni plating layer and which are identified by surface roughness analysis is defined as "r", Ra × D is 0.060 to 0.400 µm² and r is 0.010 to 0.500 µm. Hereunder, Ra × D and r are respectively described.

### [Regarding Ra × D]

The arithmetic average roughness Ra of the surface of the Ni plating layer is an index indicating the amplitude of the shapes having irregularities of the Ni plating layer surface. The larger Ra is, the larger the irregularities on the Ni plating layer surface are on average. Therefore, it is considered that there is a tendency such that the larger Ra is, the larger the contact surface area between the steel foil for a current collector and the electrode mixture layer becomes. If the contact surface area between the steel foil for a current collector and the electrode mixture layer increases, the contact resistance generated at the interface between the steel foil for a current collector and the electrode mixture layer can be reduced. As a result, the electrical conductivity of the electrode having the steel foil for a current collector and the electrode mixture layer increases.

Accordingly, in the present embodiment it is preferable for Ra to be large. In the present embodiment, although Ra is not particularly limited as long as Ra × D is within a range to be described later, for example Ra is 0.02 µm or more. A preferable lower limit of Ra is 0.03 µm, and more preferably is 0.04 µm. A preferable upper limit of Ra is not particularly limited. However, in the steel foil for a current collector according to the present embodiment, from the viewpoint of the production cost and productivity, a preferable upper limit of Ra on the Ni plating layer surface is 0.50 µm.

The mean distance D between peaks formed on the surface of the Ni plating layer is an index indicating the density of irregularities in the shapes having irregularities of the Ni plating layer surface. The larger D is, the lower the density of the irregularities on the Ni plating layer surface is. Accordingly, it is considered that there is a tendency such that the smaller D is, the larger the contact surface area between the steel foil for a current collector and the electrode mixture layer will be. If the contact surface area between the steel foil for a current collector and the electrode mixture layer increases, the contact resistance generated at the interface between the steel foil for a current collector and the electrode mixture layer can be reduced. As a result, the electrical conductivity of the electrode having the steel foil for a current collector and the electrode mixture layer increases.

Therefore, in the present embodiment, a smaller value of D is preferable. In the present embodiment, although D is not particularly limited as long as Ra × D is within the range to be described later, for example, D is 2.50 µm or less. A preferable upper limit of D is 2.30 µm, and more preferably is 2.00 µm. A preferable lower limit of D is not particularly limited. However, in the steel foil for a current collector according to the present embodiment, the lower limit of D on the Ni plating layer surface is, for example, 0.50 µm.

In the present embodiment, in addition, on the surface of the Ni plating layer, Ra × D is to be within the range of 0.060 to 0.400 µm². If Ra × D is too small, as mentioned above, there is a possibility that it will be difficult for the electrode mixture layer to enter between the irregularities formed on the Ni plating layer surface. Therefore, there is a possibility that gaps will occur between the Ni plating layer and the electrode mixture layer, and the surface area where the steel foil for a current collector and the electrode mixture layer contact will, on the contrary, become smaller. As a result, even if the arithmetic average roughness Ra of the Ni plating layer surface is large, the electrical conductivity of the steel foil for a current collector on which the electrode mixture layer is formed will decrease.

On the other hand, if Ra × D is too large, as mentioned above, the number of irregularities on the Ni plating layer surface will be small, and there is a possibility that the surface area where the Ni plating layer and the electrode mixture layer come in contact will not be large enough. As a result, even if the arithmetic average roughness Ra of the Ni plating layer surface is large, the electrical conductivity of the steel foil for a current collector on which the electrode mixture layer is formed will decrease.

Accordingly, in the present embodiment, on the surface of the Ni plating layer, Ra × D is to be within the range of 0.060 to 0.400 µm². A preferable upper limit of Ra × D is 0.380 µm², more preferably is 0.360 µm², further preferably is 0.330 µm², and further preferably is 0.300 µm². A preferable lower limit of Ra × D is 0.070 µm², and more preferably is 0.080 µm².

### [Regarding r]

The mean radius of curvature r of peaks formed on the surface of the Ni plating layer is an index that indicates the sharpness of the shapes having irregularities of the Ni plating layer surface. The smaller r is, the sharper the irregularities which are formed are. Accordingly, the smaller r is, the higher the adhesiveness of the steel foil for a current collector to the electrode mixture layer becomes. Accordingly, in the present embodiment, r is to be 0.500 µm or less. On the other hand, if r is too small, there is a possibility that protrusions on the surface of the Ni plating layer will break off during production of the steel foil for a current collector. In such a case, the protrusions that are broken off when preparing the electrode may become mixed into the electrode mixture layer, and the desired performance as a battery may not be sufficiently obtained. Accordingly, in the present embodiment, r is to be 0.010 to 0.500 µm. A preferable lower limit of r is 0.012 µm, and more preferably is 0.015 µm. A preferable upper limit of r is 0.450 µm, and more preferably is 0.400 µm.

As described above, in the steel foil for a current collector according to the present embodiment, on the surface of the Ni plating layer, Ra × D is to be 0.060 to 0.400 µm², and r is to be 0.010 to 0.500 µm. Thus, in the present embodiment, by defining the roughness of the Ni plating layer surface without depending only on the arithmetic average roughness Ra, adhesiveness of the steel foil for a current collector to the electrode mixture layer, and electrical conductivity of the electrode having the steel foil for a current collector and the electrode mixture layer can both be compatibly achieved.

### [Regarding Ra, D, and r]

As mentioned above, in the present embodiment, on the surface of the Ni plating layer, an arithmetic average roughness of the surface of the Ni plating layer is defined as "Ra", a mean distance between peaks which are formed on the surface of the Ni plating layer and which are identified by line roughness analysis is defined as "D", and a mean radius of curvature of peaks which are formed on the surface of the Ni plating layer and which are identified by surface roughness analysis is defined as "r".

In the present embodiment, Ra, D, and r can be identified by the following method. First, line roughness analysis is performed with respect to the surface of the steel foil for a current collector according to the present embodiment, and a roughness profile is obtained. Note that, a primary profile for obtaining a roughness profile is determined using a method in accordance with JIS B 0601 (2013). Specifically, the surface of the steel foil for a current collector according to the present embodiment is subjected to line roughness measurement using a shape measurement laser microscope. The shape measurement laser microscope is not particularly limited, and for example a device with the trade name "Shape Measurement Laser Microscope VK-X100" that is manufactured by Keyence Corporation can be used. In the line roughness measurement, the magnification is set to ×2000. Although an evaluation length is not particularly limited, for example the evaluation length is set to 100 to 150 µm. A primary profile is obtained based on the results of the line roughness measurement in accordance with JIS B 0601 (2013). A roughness profile is obtained by applying a filter with a sampling length of 8 µm to the obtained primary profile.

Preferably, a direction in which the line roughness measurement is performed is set to a direction that is parallel to the rolling direction of the base material. The rolling direction of the base material is identified by microscopically observing the surface of the steel foil for a current collector. However, in a case where the Ni plating layer is formed thickly or the like, even those skilled in the art may not be able to identify the rolling direction of the base material by microscopically observing the surface of the steel foil for a current collector. In such a case, the direction in which line roughness measurement is performed need not be the rolling direction.

With respect to the obtained roughness profile, the mean of the displacements from the mean line is determined, and is taken as the arithmetic average roughness Ra (µm) of the Ni plating layer surface. In addition, with respect to the obtained roughness profile, in accordance with JIS B 0601 (2013), a portion on the upper side (in a direction from the steel foil for a current collector to the space side) relative to the mean line is defined as a "profile peak". In one profile peak, the point having the maximum height is defined as a "peak". The number of identified peaks is counted. The evaluation length is divided by the number of peaks, and the resulting value is taken as the mean distance D between peaks (µm) formed on the Ni plating layer.

Next, surface roughness analysis is performed with respect to the surface of the steel foil for a current collector according to the present embodiment to obtain a measurement surface. Specifically, the surface of the steel foil for a current collector according to the present embodiment is subjected to surface roughness measurement using a shape measurement laser microscope. The shape measurement laser microscope is not particularly limited, and for example a device with the trade name "Shape Measurement Laser Microscope VK-X100" that is manufactured by Keyence Corporation can be used. In the surface roughness measurement, the magnification is set to ×2000. Although the evaluation area is not particularly limited, for example the evaluation area is set to 10000 µm². A measurement surface is obtained based on the results of the surface roughness measurement by a method in accordance with ISO 25178: 2012. Note that, the sampling length is set to 25 µm.

With respect to the obtained measurement surface, a portion on the upper side (in the direction from the steel foil for a current collector to the space side) relative to the reference surface is defined as a "profile peak". In one profile peak, the point having the maximum height is defined as a "peak". The radius of curvature at each identified peak is determined. The arithmetic average value of the obtained radii of curvature is determined, and is taken as the mean radius of curvature r (µm) of peaks formed on the Ni plating layer surface.

That is, in the present embodiment, the arithmetic average roughness Ra of the Ni plating layer surface is defined as the mean of the displacements from the mean line in a roughness profile obtained by performing measurement at a magnification of ×2000 and applying a filter with a sampling length of 8 µm in accordance with JIS B 0601 (2013). In the present embodiment, the mean distance D between peaks which are formed on the Ni plating layer surface and which are identified by line roughness analysis is defined as the mean distance between peaks in a case where, in a roughness profile obtained by performing measurement at a magnification of ×2000 and applying a filter with a sampling length of 8 µm in accordance with JIS B 0601 (2013), each portion on the upper side relative to the mean line is defined as a "profile peak", and a point having a maximum height in each profile peak is defined as a "peak". In the present embodiment, the mean radius of curvature r between peaks which are formed on the Ni plating layer surface and which are identified by surface roughness analysis is defined as the arithmetic average value of the radii of curvature of the peaks in a case where, on a measurement surface obtained by performing measurement at a magnification of ×2000 with a sampling length of 25 µm in accordance with ISO 25178: 2012, each portion on the upper side relative to the reference surface is defined as a "profile peak", and a point having the maximum height in each profile peak is defined as a "peak".

The steel foil for a current collector according to the present embodiment may further have a plating layer on the surface of the base material. Preferably, the steel foil for a current collector has a Ni plating layer on the surface of the base material. In this case, formation of an oxide film on the base material surface is suppressed, and the electrical conductivity of the steel foil for a current collector increases further. In this case, in addition, the adhesiveness between the base material and the Ni plating layer increases. Note that, in the case where the Ni plating layer is formed on the surface of the base material, the Ni plating layer formed on the surface of the base material and the Ni plating layer which has shapes having irregularities on the surface that is described later are integrated together.

### [Electrode]

The electrode according to the present embodiment includes the steel foil for a current collector which is described above, and the electrode mixture layer that is formed on the surface of the steel foil for a current collector. The electrode according to the present embodiment may be a positive electrode or may be a negative electrode. That is, the electrode is not particularly limited as long as it includes the aforementioned steel foil for a current collector, and the electrode mixture layer.

### [Electrode mixture layer]

In the present embodiment, the electrode mixture layer is not particularly limited, and it suffices that the electrode mixture layer has a well-known constitution. The electrode mixture layer includes an active material and a binder. Note that, the electrode mixture layer may contain compositions other than an active material and a binder. The electrode mixture layer contains, for example, a conductive auxiliary agent. The conductive auxiliary agent helps to improve the electronic conductivity.

### [Active material]

In the present embodiment, the active material is not particularly limited, and a well-known active material can be used. The active material is composed of powder particles which do not dissolve in an electrolyte which is described later. In a case where the electrode is a negative electrode, the negative electrode active material, for example, may be a carbon-based material that is typified by graphite, may be an alloy material that is typified by a CuSn alloy or a NiTiSi alloy, or may be a Si-based material that is typified by SiO. In a case where the electrode is a positive electrode, the positive electrode active material, for example, may be lithium cobalt oxide, may be a ternary material, may be lithium manganate, may be lithium iron phosphate, or may be a high-nickel material. That is, the positive electrode active material and the negative electrode active material are not particularly limited, and it suffices that the composition of each of the positive electrode active material and the negative electrode active material is well-known.

### [Binder]

In the present embodiment, the binder is not particularly limited, and a well-known binder can be used. The binder, for example, may be resin that is water-insoluble resin and which is insoluble in a solvent used in a non-aqueous electrolyte of a battery, may be water-soluble resin, or may be styrene-butadiene rubber (SBR). Examples of resin that is water-insoluble resin and which is insoluble in a solvent used in a non-aqueous electrolyte of a battery include polyimide (PI), poly(vinylidene fluoride) (PVDF), polymethyl methacrylate (PMMA), and polytetrafluoroethylene (PTFE). Examples of water-soluble resin include carboxymethylcellulose (CMC) and polyvinyl alcohol (PVA).

The electrode according to the present embodiment includes the aforementioned steel foil for a current collector, and a well-known electrode mixture layer which is formed on the surface of the steel foil for a current collector. As a result, in the electrode according to the present embodiment, the adhesiveness between the steel foil for a current collector and the electrode mixture layer is high, and the electrical conductivity is high.

### [Battery]

The battery according to the present embodiment includes the aforementioned electrode, a separator, and an electrolyte. The battery according to the present embodiment is not particularly limited as long as it includes the electrode including the steel foil for a current collector that is described above, and it suffices that the remaining configuration of the battery is a well-known configuration. The shape of the battery according to the present embodiment is not particularly limited, and the battery may be a cylindrical shape, may be a rectangular shape, may be a coin shape, or may be a sheet shape. Further, the battery according to the present embodiment may be a secondary battery or may be a primary battery. In a case where the battery according to the present embodiment is a secondary battery, for example, the battery may be a non-aqueous electrolyte secondary battery, may be an aqueous electrolyte secondary battery, or may be an all-solid-state secondary battery.

### [Separator]

The separator is arranged as an insulator between the positive electrode and the negative electrode, and prevents the occurrence of electrical short circuits. In the present embodiment, the separator is not particularly limited, and a well-known separator can be used. The separator may be, for example, a polyolefin-based material such as polypropylene or polyethylene or a mixture of these two materials, or may be a porous body such as a glass filter.

### [Electrolyte]

The electrolyte exchanges ions with the positive electrode and the negative electrode. In the present embodiment, the electrolyte is not particularly limited, and a well-known electrolyte can be used. The electrolyte may be a liquid electrolytic solution, or may be a solid electrolyte.

The battery according to the present embodiment includes the aforementioned electrode, a well-known separator, and a well-known electrolyte. As a result, in the electrode according to the present embodiment, the adhesiveness between the steel foil for a current collector and the electrode mixture layer is high, and the electrical conductivity is high.

### [Adhesiveness]

In the steel foil for a current collector according to the present embodiment, the adhesiveness with respect to the electrode mixture layer is high. In the present embodiment, the adhesiveness of the steel foil for a current collector to the electrode mixture layer can be evaluated by the following method.

A test specimen is prepared from the steel foil for a current collector according to the present embodiment. Specifically, a composition of the electrode mixture layer is applied onto the steel foil for a current collector and dried. Although the size of the steel foil for a current collector is not particularly limited, for example, the steel foil has a length of 210 mm and a width of 148 mm. Although the composition of the electrode mixture layer is not particularly limited, for example, the composition is obtained by mixing NiTiSi alloy powder, styrene-butadiene rubber (SBR), and carboxymethylcellulose (CMC) at a ratio of 95:4:1, and kneading the mixture. Note that, in this case, water is used as a solvent. The composition of the electrode mixture layer is applied onto the test specimen with an applicator having a coating width of 80 mm and a gap of 200 µm. At this time, the composition is applied so that there is an uncoated portion of 34 mm on each side. The applied composition is then dried by heating at 75°C for 20 minutes. A test specimen is cut off from the electrode after drying. Although the size of the test specimen is not particularly limited, for example, the test specimen is 15 mm wide and 74 mm long (a coated portion of 40 mm). A test specimen on which the electrode mixture layer is formed is prepared by the above method.

A double-sided tape is affixed to a part of the test specimen where the electrode mixture layer is formed, and is adhered to a stainless steel sheet. A region of the test specimen where the electrode mixture layer is not formed is lifted vertically to peel off the electrode mixture layer. Note that, the speed at which the test specimen is lifted is set to 50 mm/min. At this time, a force gauge is attached to the test specimen to measure the peel strength (N/m). In the present embodiment, if the peel strength is 25.0 N/m or more, it can be evaluated that the steel foil for a current collector has high adhesiveness to the electrode mixture layer.

### [Electrical conductivity]

The steel foil for a current collector according to the present embodiment has high electrical conductivity in the case where the electrode mixture layer is formed on the surface thereof. In the present embodiment, the electrical conductivity of the steel foil for a current collector on which the electrode mixture layer is formed can be evaluated by the following method.

The electrode mixture layer is formed on the steel foil for a current collector according to the present embodiment in a similar manner to the aforementioned test for evaluating adhesiveness. A test specimen is prepared from the steel foil for a current collector on which the electrode mixture layer is formed. In addition, in a similar manner to the aforementioned test for evaluating adhesiveness, the electrode mixture layer is also formed on a stainless steel foil that does not have the Ni plating layer, to prepare a control test specimen. Note that, the thicknesses of the test specimen and the control test specimen are made the same. The size of the test specimen and the control test specimen is not particularly limited, and for example, the test specimen and the control test specimen are formed in a circular shape having a diameter of 15 mm.

The penetration resistance of the test specimen is measured using a resistance meter. The resistance meter is not particularly limited, and for example a resistance meter with the trade name "Resistance Meter RM3544" manufactured by HIOKI E. E. Corporation can be used. Specifically, the test specimen is sandwiched between terminals made of Cu, and a load of 0.6 kgf/cm² is applied. The periphery of the test specimen is surrounded with an insulator, and the resistance value (Ω) of the test specimen is determined using the aforementioned resistance meter. A similar test is also performed on the control test specimen. A ratio of the resistance value (Ω) of the test specimen to the resistance value (Ω) of the control test specimen is defined as the penetration resistance (relative value). In the present embodiment, if the penetration resistance (relative value) is 0.70 or less, it can be evaluated that the steel foil for a current collector on which the electrode mixture layer is formed has high electrical conductivity.

### [Method for producing steel foil for current collector]

An example of a method for producing the steel foil for a current collector according to the present embodiment will now be described. The production method described hereunder is one example for producing the steel foil for a current collector according to the present embodiment, and a method for producing the steel foil for a current collector according to the present embodiment may be a production method other than the production method described hereunder. However, the production method described hereunder is one preferable example of the method for producing the steel foil for a current collector according to the present embodiment. The method for producing the steel foil for a current collector according to the present embodiment includes a base material preparation process and a Ni plating layer formation process.

### [Base material preparation process]

In the base material preparation process, a base material of the steel foil for a current collector is prepared. The method for preparing the base material is not particularly limited, and it suffices that a well-known method is used. As the method for preparing the base material, for example, an intermediate steel material having a desired chemical composition may be prepared, and the intermediate steel material may be subjected to cold working to prepare the base material. Hereunder, this case is specifically described.

The intermediate steel material having a desired chemical composition can be appropriately set according to the mechanical properties of the base material to be obtained. Here, the term "intermediate steel material" means a steel sheet having a thickness of several hundred µm to several mm. The intermediate steel material may be a stainless steel sheet or may be a plated steel sheet.

In the case of preparing the base material by subjecting the intermediate steel material to cold working, a preferable cold working is cold rolling. The cold rolling can be performed using well-known equipment. For example, a plurality of reversing cold rolling mills may be used. In this case, the reduction rate in the cold rolling is not particularly limited. An appropriate reduction rate can be set according to the thickness of the base material to be obtained. Further, the base material after cold rolling may be subjected to an appropriate heat treatment.

As described above, the base material is prepared in the preparation process. The base material may be produced by the aforementioned preferable process, or may be a base material produced by a third party, or may be a base material that is prepared by being produced in another factory other than the factory where the Ni plating layer formation process which is described later is performed or at a different place of business. In brief, the preparation process in the present embodiment is not particularly limited, and it suffices that it is a well-known method.

Note that, as mentioned above, the base material may have a plating layer on the surface thereof. In the case of forming a plating layer on the surface of the base material, preferably, cold rolling is performed after the plating layer is formed on the surface of the intermediate steel material. In this case, the plating layer on the surface of the base material can be thinly formed. Preferably, the Ni plating layer is formed on the surface of the intermediate steel material. In this case, for example, the intermediate steel material (thickness of several hundred µm) having the Ni plating layer is subjected to cold rolling to obtain the base material having a thickness of 50 µm or less. Note that, the method for forming the Ni plating layer is not particularly limited, and it suffices to use a well-known method.

### [Ni plating layer formation process]

In the Ni plating layer formation process, the Ni plating layer is formed on the surface of the prepared base material. Specifically, the surface of the prepared base material is washed with alcohol. The alcohol is, for example, isopropanol. The plating solution for forming the Ni plating layer contains Ni(NH₂SO₃)₂ and CaCl₂. The concentration of Ni(NH₂SO₃)₂ in the plating solution is 1.0 to 2.0 mol/L, and the concentration of CaCl₂ is 0.5 to 3.0 mol/L. The base material whose surface was washed is immersed in the plating solution that is maintained at a temperature of 40 to 80°C, and a current of 2 to 10 A/dm² is applied to the plating solution. At this time, the base material is used as a cathode, and a Ni steel sheet is used as an anode. The time for which the current is applied is, for example, 10 to 120 seconds.

Preferably, an underplating layer is formed prior to the aforementioned Ni plating layer formation process. The chemical composition of the underplating layer preferably consists of Ni and impurities. That is, preferably, before the aforementioned Ni plating layer formation process, an underlying Ni plating layer is formed. In this case, the adhesiveness between the base material and the Ni plating layer increases.

### [Underplating layer formation process]

An underplating layer formation process is optionally performed. That is, an underplating layer formation process need not be performed. In the case of performing the underplating layer formation process, the process is performed at a time which is after the preparation process and is before the Ni plating layer formation process. Specifically, the surface of the prepared base material is washed with alcohol. The alcohol is, for example, isopropanol. The plating solution for forming the underplating layer contains NiSO₄ and NiCl₂. The concentration of NiSO₄ in the plating solution is 1.3 to 1.9 mol/L, and the concentration of NiCl₂ is 0.3 to 0.6 mol/L. The base material whose surface was washed is immersed in the plating solution that is maintained at a temperature of 40 to 80°C, and a current of 2 to 10 A/dm² is applied to the plating solution. At this time, the base material is used as the cathode, and the Ni steel sheet is used as the anode. The time for which the current is applied is, for example, 10 to 120 seconds.

By performing the above processes, the steel foil for a current collector according to the present embodiment can be produced. Note that, as mentioned above, the production process described above is one preferable example for producing the steel foil for a current collector according to the present embodiment, and the method for producing the steel foil for a current collector according to the present embodiment is not limited to the method described above.

### [Method for producing electrode]

One example of a method for producing an electrode using the steel foil for a current collector according to the present embodiment is as follows. The method for producing an electrode according to the present embodiment includes an electrode mixture preparation process and an electrode mixture layer formation process.

### [Electrode mixture preparation process]

In the electrode mixture preparation process, a composition for forming an electrode mixture layer is prepared. It suffices to prepare the composition for forming an electrode mixture according to the electrode mixture layer to be obtained. For example, the composition is prepared by kneading an active material and a binder. For example, the composition may also be prepared by kneading an active material, a binder, and a conductive auxiliary agent. For example, in addition, the composition may be prepared by kneading an active material, a binder, and a solvent. The kneading method is appropriately adjusted according to the active material, the binder, the conductive auxiliary agent, and the solvent. That is, it suffices to perform the electrode mixture preparation process according to a well-known method.

### [Electrode mixture layer formation process]

In the electrode mixture layer formation process, the electrode mixture layer is formed on the surface of the aforementioned steel foil for a current collector. Specifically, the kneaded composition for forming an electrode mixture is applied onto the aforementioned steel foil for a current collector. The application method is not particularly limited, and it suffices to use a well-known method. For example, the composition may be applied onto the steel foil for a current collector using an applicator in which a gap is provided. For example, it is also possible to use a spray to apply the composition onto the steel foil for a current collector by spraying.

In addition, the composition applied onto the steel foil for a current collector is dried to form the electrode mixture layer. The drying method is not particularly limited, and it suffices to use a well-known method. For example, the composition may be dried by being heated at 75°C for 20 minutes. For example, the composition may be dried without being heated.

By performing the above processes, the electrode according to the present embodiment can be produced. Note that, as mentioned above, the production process described above is one preferable example for producing the electrode according to the present embodiment, and the method for producing the electrode according to the present embodiment is not limited to the method described above.

### [Method for producing battery]

A method for producing the battery according to the present embodiment is not particularly limited. To produce the battery according to the present embodiment, a laminated product in which the aforementioned electrode, a separator, and a counter electrode are laminated is produced by a well-known method. The laminated product is housed in a case to produce the battery.

### EXAMPLES

Base materials of each test number shown in Table 1 were prepared. The base material of each test number was formed in a rectangular shape to have a size with a length of 297 mm and a width of 210 mm in a manner so that a longitudinal direction was parallel to the rolling direction. The term "Ni-plated steel foil" in the column "Base Material" in Table 1 means a Ni-plated steel foil having a thickness of 10 µm. The Ni-plated steel foil was prepared by subjecting a Ni-plated steel sheet having a thickness of 100 µm to cold rolling. Note that, the base metal of the Ni-plated steel foil was ultra-low carbon steel. The term "Stainless steel foil A" in the column "Base Material" in Table 1 means a ferritic stainless steel foil having a thickness of 10 µm and corresponding to SUS 430 defined in JIS G 4305 (2012). The term "Stainless steel foil B" in the column "Base Material" in Table 1 means a ferritic stainless steel foil having a thickness of 10 µm and corresponding to SUS 444 defined in JIS G 4305 (2012).

### [Table 1]

**Table 1**

| Test No. | Base Material | Plating Conditions | | | |
|---|---|---|---|---|---|
| | | Underplating Layer Formation | Ni Plating Layer Formation | CaCl₂ Concentration (mol/L) | Current Application Time (sec) |
| 1 | Ni-plated steel foil | Performed | Performed | 2.0 | 33 |
| 2 | Ni-plated steel foil | Performed | Performed | 2.0 | 65 |
| 3 | Ni-plated steel foil | Performed | Performed | 1.0 | 33 |
| 4 | Ni-plated steel foil | Performed | Performed | 1.0 | 65 |
| 5 | Ni-plated steel foil | - | Performed | 2.0 | 33 |
| 6 | Ni-plated steel foil | Performed | Performed | 2.0 | 33 |
| 7 | Ni-plated steel foil | Performed | Performed | 2.0 | 13 |
| 8 | Ni-plated steel foil | Performed | Performed | 2.0 | 20 |
| 9 | Ni-plated steel foil | Performed | Performed | 2.0 | 26 |
| 10 | Ni-plated steel foil | Performed | Performed | 2.0 | 33 |
| 11 | Stainless steel foil A | Performed | Performed | 2.0 | 65 |
| 12 | Stainless steel foil B | Performed | Performed | 2.0 | 65 |
| 13 | Ni-plated steel foil | Performed | Performed | 2.0 | 13 |
| 14 | Ni-plated steel foil | Performed | Performed | 1.0 | 13 |
| 15 | Stainless steel foil B | Performed | - | - | - |
| 16 | Ni-plated steel foil | - | - | - | - |
| 17 | Ni-plated steel foil | Performed | - | - | - |
| 18 | Stainless steel foil A | - | - | - | - |
| 19 | Stainless steel foil B | - | - | - | - |

An underplating layer was formed with respect to the base material of some test numbers. Specifically, an underplating layer was formed in the base materials of the test numbers for which the term "Performed" is described in the column "Underplating Layer Formation" in Table 1. Specifically, the surface of the base material of the relevant test number was washed with isopropanol for 30 seconds, and then washed with pure water for 30 seconds. The washed base material was immersed in a plating solution to form an underplating layer (Ni plating layer) having a thickness of 1 µm. The plating solution contained 1.9 mol/L of NiSO₄ and 0.4 mol/L of NiCl₂. The temperature of the plating solution was set to 50°C, the current value was set to 5 A/dm², and the current application time was set to 70 seconds. Note that, for those test numbers for which the symbol"-" is described in the column "Underplating Layer Formation" in Table 1, an underplating layer was not formed in the base material.

In addition, a Ni plating layer was formed with respect to the base material of some test numbers. Specifically, a Ni plating layer was formed in the base materials of the test numbers for which the term "Performed" is described in the column "Ni Plating Layer Formation" in Table 1. Specifically, the surface (underplating layer surface) of the base material of the relevant test number was washed with isopropanol for 30 seconds, and then washed with pure water for 30 seconds. The washed base material was immersed in a plating solution to form a Ni plating layer. The plating solution contained 1.5 mol/L of Ni(NH₂SO₃)₂, and CaCl₂ at a concentration described in Table 1. The temperature of the plating solution was set to 60°C, the current value was set to 5 A/dm², and the current application time was set as described in Table 1. Note that, for those test numbers for which the symbol "-" is described in the column "Ni Plating Layer Formation" in Table 1, a Ni plating layer was not formed in the base material.

The steel foil for a current collector of each test number produced as described above was subjected to a Ni plating layer thickness measurement test, a surface roughness measurement test, an electrical conductivity evaluation test, and an adhesiveness evaluation test.

### [Ni plating layer thickness measurement test]

The thickness of the Ni plating layer of the steel foil for a current collector of each test number was determined. The thickness of the Ni plating layer was determined by the fluorescent X-ray type test method defined in JIS H 8501 (1999). The thickness of the obtained Ni plating layer of each test number is shown in Table 2.

### [Table 2]

**Table 2**

| Test No. | Surface Shape of Steel Foil for Current Collector | | | | | Evaluation Results | |
|---|---|---|---|---|---|---|---|
| | Ni Plating Layer Thickness (µm) | Ra (µm) | D (µm) | Ra×D (µm²) | r (µm) | Penetration Resistance (Relative Value) | Peel Strength (N/m) |
| 1 | 1.5 | 0.15 | 1.24 | 0.186 | 0.056 | 0.51 | 177.8 |
| 2 | 2.0 | 0.21 | 1.21 | 0.254 | 0.030 | 0.65 | 57.4 |
| 3 | 1.5 | 0.04 | 1.75 | 0.070 | 0.401 | 0.57 | 103.7 |
| 4 | 2.0 | 0.15 | 1.22 | 0.183 | 0.032 | 0.37 | 168.0 |
| 5 | 0.5 | 0.23 | 1.25 | 0.281 | 0.030 | 0.16 | 53.8 |
| 6 | 0.6 | 0.22 | 1.26 | 0.278 | 0.026 | 0.40 | 47.1 |
| 7 | 0.7 | 0.08 | 1.29 | 0.099 | 0.086 | 0.45 | 46.0 |
| 8 | 0.8 | 0.15 | 1.24 | 0.191 | 0.025 | 0.30 | 61.3 |
| 9 | 0.9 | 0.19 | 1.30 | 0.249 | 0.033 | 0.44 | 79.5 |
| 10 | 1.0 | 0.24 | 1.08 | 0.255 | 0.020 | 0.49 | 90.5 |
| 11 | 2.0 | 0.20 | 1.21 | 0.242 | 0.042 | 0.10 | 218.0 |
| 12 | 2.0 | 0.24 | 1.22 | 0.293 | 0.019 | 0.16 | 218.0 |
| 13 | 1.2 | 0.04 | 1.43 | 0.057 | 0.233 | 0.72 | 29.0 |
| 14 | 1.2 | 0.04 | 2.32 | 0.093 | 0.722 | 0.61 | 19.4 |
| 15 | 0.5 | 0.03 | 2.30 | 0.072 | 0.661 | 0.62 | 13.9 |
| 16 | 0.3 | 0.02 | 2.27 | 0.045 | 0.799 | 1.00 | 12.6 |
| 17 | 0.5 | 0.02 | 1.52 | 0.032 | 0.592 | 0.91 | 20.2 |
| 18 | 0.0 | 0.04 | 2.48 | 0.099 | 0.554 | 1.00 | 8.0 |
| 19 | 0.0 | 0.06 | 2.68 | 0.161 | 0.638 | 1.00 | 9.7 |

### [Surface roughness measurement test]

For the steel foil for a current collector of each test number, the arithmetic average roughness Ra (µm) of the Ni plating layer surface, the mean distance D (µm) between peaks formed on the Ni plating layer surface, and the mean radius of curvature r (µm) of peaks formed on the Ni plating layer surface were determined by the methods described above. The line roughness measurement and the surface roughness measurement were performed using a device with the trade name "Shape Measurement Laser Microscope VK-X100" manufactured by Keyence Corporation. The line roughness measurement was performed at an arbitrary three places in the longitudinal direction (rolling direction) of the steel foil for a current collector. Based on the line roughness measurement, the arithmetic average roughness Ra and the mean distance D between peaks that were obtained by the methods described above were determined, and arithmetic average values thereof were used. Surface roughness measurement was performed by the method described above, and the mean radius of curvature r of the obtained peaks was determined. The obtained Ra (µm), D (µm), and r (µm), as well as Ra × D (µm²) as determined based on the obtained Ra (µm) and D (µm) are shown in Table 2 for each test number.

### [Electrical conductivity evaluation test]

The electrical conductivity of the steel foil for a current collector of each test number was evaluated by the method described above. Note that, three test specimens were prepared for each test number, and the penetration resistance was determined three times for each of the test specimens. For each test number, the arithmetic average value of the obtained nine penetration resistances (relative value) was defined as the penetration resistance (relative value). The obtained penetration resistance (relative value) of each test number is shown in Table 2.

### [Adhesiveness evaluation test]

The adhesiveness of the steel foil for a current collector of each test number to the electrode mixture layer was evaluated by the method described above. Note that, four test specimens were prepared for each test number, and the peel strength (N/m) of each test specimen was determined. For each test number, the arithmetic average value of the obtained four peel strengths was defined as the peel strength (N/m). The obtained peel strength (N/m) of each test number is shown in Table 2.

### [Evaluation results]

Referring to Table 1 and Table 2, in the steel foils for a current collector of Test Nos. 1 to 12, the Ni plating layer was formed on the surface of the base material, Ra × D was within the range of 0.060 to 0.400 µm², and r was within the range of 0.010 to 0.500 µm. As a result, the penetration resistance (relative value) was 0.70 or less, and thus high electrical conductivity was exhibited. In addition, as a result, the peel strength was 25.0 N/m or more, and thus high adhesiveness was exhibited.

On the other hand, in the steel foil for a current collector of Test No. 13, Ra × D was less than 0.060 µm². As a result, the penetration resistance (relative value) was more than 0.70, and high electrical conductivity was not exhibited.

In the steel foils for a current collector of Test Nos. 14 and 15, r was more than 0.500 µm. As a result, the peel strength was less than 25.0 N/m, and high adhesiveness was not exhibited.

In the steel foils for a current collector of Test Nos. 16 and 17, Ra × D was less than 0.060 µm², and r was more than 0.500 µm. As a result, the penetration resistance (relative value) was more than 0.70, and high electrical conductivity was not exhibited. In addition, as a result, the peel strength was less than 25.0 N/m, and high adhesiveness was not exhibited.

In the steel foils for a current collector of Test Nos. 18 and 19, the Ni plating layer was not formed on the surface of the base material. In addition, r was more than 0.500 µm. As a result, the penetration resistance (relative value) was more than 0.70, and high electrical conductivity was not exhibited. In addition, as a result, the peel strength was less than 25.0 N/m, and high adhesiveness was not exhibited.

An embodiment of the present disclosure has been described above. However, the foregoing embodiment is merely an example for implementing the present disclosure. Accordingly, the present disclosure is not limited to the above embodiment, and the above embodiment can be appropriately modified and implemented within a range that does not deviate from the gist of the present disclosure.

## Claims

1. A steel foil for a current collector, comprising:
a base material, and a Ni plating layer that is formed on a surface of the base material,
wherein:
when an arithmetic average roughness of a surface of the Ni plating layer is defined as "Ra", a mean distance between peaks which are formed on the surface of the Ni plating layer and which are identified by line roughness analysis is defined as "D", and a mean radius of curvature of peaks which are formed on the surface of the Ni plating layer and which are identified by surface roughness analysis is defined as "r",
Ra × D is 0.060 to 0.400 µm², and
r is 0.010 to 0.500 µm.

2. The steel foil for a current collector according to claim 1, wherein:
a mean thickness of the base material is 5 to 30 µm.

3. An electrode, comprising:
the steel foil for a current collector according to claim 1 or claim 2, and
an electrode mixture layer that is formed on a surface of the steel foil for a current collector.

4. A battery, comprising:
the electrode according to claim 3,
a separator, and
an electrolyte.
